# EUROPÄISCHE PATENTSCHRIFT

(11) **EP 4 228 949 B1**
(45) Veröffentlichungstag und Bekanntmachung des Hinweises auf die Patenterteilung: **11.11.2026**
(21) Anmeldenummer: 21778386.9
(22) Anmeldetag: 16.09.2021
(51) Int. Cl.: B61L 15/00, E01B 27/02, G01H 1/00, E01B 27/20

(54) **VERFAHREN UND SYSTEM ZUR ERMITTLUNG EINER ERSCHÜTTERUNGSÜBERTRAGUNG IM BEREICH EINES GLEISES**
METHOD AND SYSTEM FOR ASCERTAINING A VIBRATION TRANSMISSION IN THE REGION OF A TRACK
PROCÉDÉ ET SYSTÈME POUR DÉTERMINER UNE TRANSMISSION DE VIBRATIONS AU NIVEAU D'UNE VOIE

(30) Priorität: 16.10.2020 AT 508902020
(43) Veröffentlichungstag der Anmeldung: 23.08.2023
(73) Patentinhaber: Plasser & Theurer Export von Bahnbaumaschinen Gesellschaft m.b.H., 1010 Wien (AT)
(72) Erfinder: AUER, Florian, 1010 Wien (AT); ANTONY, Bernhard, 2000 Stockerau (AT); KOPF, Fritz, 1140 Wien (AT)
(86) Internationale Anmeldenummer: PCT/EP2021/075408
(87) Internationale Veröffentlichungsnummer: WO 2022/078698

(56) Entgegenhaltungen:
- WO-A1-2020/011517
- WO-A1-91/10584
- US-A1- 2017 184 550

## Beschreibung

### Technisches Gebiet

Die Erfindung betrifft ein Verfahren zur Ermittlung einer Erschütterungsübertragung im Bereich eines Gleises, wobei das Gleis während eines Arbeitsprozesses mittels eines Arbeitsaggregats einer am Gleis fahrenden Gleisbaumaschine erschüttert wird, wobei über das Gleis übertragene Erschütterungen mittels eines vom Arbeitsaggregat distanzierten Sensors gemessen werden und wobei in einer Auswerteeinrichtung Messdaten des Sensors ausgewertet werden. Des Weiteren betrifft die Erfindung ein System zur Durchführung des Verfahrens.

### Stand der Technik

Ein gattungsgemäßes Verfahren ist aus der AT 521 420 A1 bekannt. Bei diesem Verfahren kommt eine auf einem Gleis fahrende Gleisbaumaschine mit Arbeitsaggregaten zum Einsatz. Während eines Arbeitsprozesses werden mittels der Arbeitsaggregate Vibrationen in das Gleis eingeleitet und zu Kalibrierung eines entlang des Gleises erstreckten Sensors genutzt. Dabei wird die Erschütterungsübertragung im Bereich des Gleises ermittelt, indem mittels einer Auswerteeinrichtung aus Vibrationswerten der Arbeitsaggregate, aus Positionsdaten der Gleisbaumaschine und aus Messdaten des Sensors eine Charakteristik der Vibrationsübertragung abgeleitet wird.

Mit dem auf diese Weise kalibrierten Sensor ist in weiterer Folge eine Überwachung einer Gleisstrecke durchführbar. Konkret erfolgt mittels des Sensors eine Ortung von Schall- bzw. Vibrationsquellen am überwachten Gleisabschnitt. Von Interesse sind insbesondere aktuelle Positionen von Schienenfahrzeugen, welche die Gleisstrecke befahren. Aber auch auftretende Defekte entlang der Gleisstrecke sind mittels des Sensors auffindbar. Durch eine veränderte Schallausbreitung sind beispielsweise Imperfektionen des Gleises wie Riffelbildung am Schienenkopf, Welligkeiten des Gleises, Hohllagen, defekte Schwellen und dergleichen detektierbar.

### Darstellung der Erfindung

Der Erfindung liegt die Aufgabe zugrunde, ein Verfahren der eingangs genannten Art dahingehend zu verbessern, dass ein mit einer Gleisbaumaschine durchgeführter Arbeitsprozess effizienter und störungsfrei abläuft. Weiter ist es eine Aufgabe der Erfindung, ein verbessertes System zum effizienten und störungsfreien Betrieb der Gleisbaumaschine anzugeben.

Erfindungsgemäß werden diese Aufgaben gelöst durch die Merkmale der unabhängigen Ansprüche 1 und 13. Abhängige Ansprüche geben vorteilhafte Ausgestaltungen der Erfindung an.

Dabei wird der Auswerteeinrichtung eine Position des Sensors bezüglich des Arbeitsaggregats vorgegeben, wobei in der Auswerteeinrichtung eine Korrelation zwischene mit dem Sensor erfassten Erschütterungswirkungen des Arbeitsaggregats und aktuellen Distanzen zwischen dem Arbeitsaggregat und dem Sensor ermittelt wird. Erfindungsgemäß wird somit die Position des Sensors herangezogen, um eine ortsabhängige Erschütterungswirkung des Arbeitsaggregats auszuwerten. Konkret wird die erfasste Erschütterungswirkung in Korrelation zur Entfernung des Sensors vom Arbeitsaggregat gesetzt.

Im Gegensatz dazu bleibt beim bekannten Verfahren gemäß der eingangs angeführten AT 521 420 A1 zur Sensorkalibrierung die Position des Sensors oder die Distanz zwischen Sensor und Arbeitsaggregat unbeachtet. Es wird lediglich die Position des Arbeitsaggregats erfasst und gemeinsam mit einem Sensorsignal ausgewertet, um das Sensorsignal mit der Position des Arbeitsaggregats abzugleichen.

Das vorliegende erfindungsgemäße Verfahren hat den Vorteil, dass die Erschütterungswirkung des Arbeitsaggregats am Ort des Sensors in Echtzeit erfassbar ist. Diese Information ist nutzbar, um den Arbeitsprozess der Gleisbaumaschine zu optimieren und gleichzeitig Schäden an Einrichtungen im Umfeld des Gleises zu vermeiden. Das erfindungsgemäße Verfahren ermöglicht die Ermittlung der Ausbreitung der mittels der Gleisbaumaschine hervorgerufenen Erschütterungen und eine prozessbegleitende Beobachtung schützenswerter Einrichtungen im Umfeld der Gleisbaumaschine.

Vorteilhafterweise wird zur Ermittlung der Erschütterungswirkung des Arbeitsaggregats mittels des Sensors eine Beschleunigung und/oder Schwingschnelle gemessen. Insbesondere werden mit einem ortsfesten Sensor Beschleunigungen oder Schwingschnellen in drei orthogonalen Raumrichtungen gemessen. Dabei ist es sinnvoll, wenn der Sensor mit einem Prozessor gekoppelt ist, um eine lokale Teilanalyse der erfassten Sensorwerte durchzuführen.

Eine Weiterbildung des Verfahrens sieht vor, dass Messdaten des Sensors und vorzugsweise Positionsdaten des Sensors über eine drahtlose Datenverbindung an die Auswerteeinrichtung übertragen werden. Die Übertragung von Positionsdaten ist sinnvoll, wenn der Auswerteeinrichtung die Position des Sensors noch nicht durch eine Bedienperson oder mittels Übertragung aus einem Datenspeicher vorgegeben wurde.

Beispielsweise ist der Sensor mit einer GNSS-Empfangseinrichtung gekoppelt, um die Position des Sensors zu bestimmen. Eine entsprechende Sensoreinheit umfasst einen Stromspeicher, um den Sensor, die GNSS-Empfangseinrichtung und gegebenenfalls einen Analyseprozessor mit Energie zu versorgen. Der Vorteil einer solchen Sensoreinheit ist die flexible Einsetzbarkeit. Die Anbringung an einer schützenswerten Einrichtung erfolgt nur vorübergehend, um die Erschütterungswirkung der Gleisbaumaschine zu überwachen.

Eine weitere Verbesserung des Verfahrens sieht vor, dass der Auswerteieinrichtung charakteristische Parameter einer vom Arbeitsaggregat erzeugten Schwingung vorgegeben werden und dass die Messdaten mit diesen charakteristischen Parametern abgeglichen werden. Beispielsweise werden Betriebsparameter eines Schwingungsantriebs als charakteristische Parameter der erzeugten Schwingung herangezogen (z.B. Motordrehzahl eines Exzenterantriebs).

Ergänzend oder alternativ dazu ist es sinnvoll, Schwingungsparameter direkt am Arbeitsaggregat mittels einer entsprechenden Sensorik zu erfassen. Auf diese Weise erfolgt eine prozessbegleitende Messung der Schwingungen am Arbeitsaggregat sowie die simultane Messung der Erschütterungen in der Umgebung. Die erfassten Daten der Emissionen (dynamische Anregung durch die Maschine) und der Immissionen (mittels Sensor erfasste Erschütterungen) werden in weiterer Folge in eine geometrische Relation gebracht.

Dabei ist es von Vorteil, wenn das Gleis mittels mehrerer Arbeitsaggregate der Gleisbaumaschine an voneinander distanzierten Stellen erschüttert wird und wenn die Messdaten anhand der jeweiligen charakteristischen Parameter der vom jeweiligen Arbeitsaggregat erzeugten Schwingung dem entsprechenden Arbeitsaggregat zugeordnet werden. Beispielsweise werden die Erschütterungen durch ein Stopfaggregat und durch ein Stabilisationsaggregat (dynamischer Gleisstabilisator, DGS) verursacht. Auch andere Aggregate (Vorkopfverdichter, Zwischenfachverdichter etc.) sind als Erschütterungsquellen im Sinne der Erfindung nutzbar. Dabei ist in der Auswerteeinrichtung ein Auswertealgorithmus eingerichtet, der auf Basis der vorgegebenen charakteristischen Schwingungsanregung zwischen den von der Gleisbaumaschine hervorgerufenen Erschütterungsimmissionen und jenen von sonstigen Quellen stammenden zu unterscheiden.

Des Weiteren wird das Verfahren verbessert, indem mittels der Auswerteeinrichtung aus der ermittelten Korrelation eine Übertragungsfunktion und/oder eine Abklingfunktion abgeleitet wird. Übertragungsfunktionen bzw. Abklingfunktionen geben die örtlichen Gegebenheiten wider und ermöglichen eine Echtzeitprognose für die Ausbreitung von Erschütterungen.

Deshalb ist es von Vorteil, wenn mittels der Auswerteeinrichtung mit der Übertragungsfunktion und/oder Abklingfunktion eine laufende Erschütterungsprognose errechnet wird. Diese Prognosen bilden die Basis für Entscheidungen, ob bei weiterer Annäherung an ein mittels des Sensors überwachtes Schutzobjekt Maßnahmen zur Reduktion der Erschütterungen erforderlich werden. Die Wirksamkeit der getroffenen Maßnahmen wird sofort anhand der an die Auswerteeinrichtung übermittelten Messdaten des Sensors erkennbar.

Bei einer Weiterbildung des Verfahrens werden der Auswerteinrichtung die Positionen mehrerer Sensoren vorgegeben, wobei in der Auswerteinrichtung für jeden Sensor eine Korrelation zwischen der erfassten Erschütterungswirkung und der zugehörigen Distanz zwischen Arbeitsaggregat und Sensor ermittelt wird. Auf diese Weise werden mehrere ortsfeste Messpunkte simultan überwacht.

Eine Verbesserung des gesamten Arbeitsvorgangs wird erzielt, indem die Gleisbaumaschine in Abhängigkeit einer Ausgangsgröße der Auswerteeinrichtung automatisiert gesteuert wird. Damit wird die Einhaltung von vorgegebenen Erschütterungsgrenzen sichergestellt, ohne ein Bedienpersonal mit dieser Aufgabe zu belasten.

Vorteilhafterweise wird bei dieser Verbesserung die Ausgangsgröße mit einem Schwellenwert verglichen, wobei insbesondere bei Annäherung der Ausgangsgröße an den Schwellenwert ein Prozessparameter des Arbeitsprozesses geändert wird. Beispielsweise wird eine Reduktion der Erschütterungen erwirkt (z.B. Zurückregeln der Schwingungsamplitude des Arbeitsaggregats), wenn an einer oder an mehreren Messstellen eine erfasste Erschütterungswirkung den vorgegeben Schwellenwert erreicht.

In einer weiteren Ausprägung der Erfindung wird eine Erschütterungsausbreitung in Gleislängsrichtung mittels eines an der Gleisbaumaschine angeordneten Sensors erfasst. Durch diese gleisgebundene Messung der Erschütterungsausbreitung ist die Beurteilung der Systemsteifigkeit (Gleisrost-Untergrund) möglich.

Vorteilhaft weitergebildet wird das Verfahren, indem ein numerisches Modell eines aus der Gleisbaumaschine und dem Gleis gebildeten Interaktionssystems errechnet wird, wobei insbesondere mittels des numerischen Modells bodenmechanische Parameter errechnet werden. Auf diese Weise ist eine umfassende Beurteilung des Untergrundes durchführbar.

Das erfindungsgemäße System zur Durchführung eines der beschriebenen Verfahren weist eine Gleisbaumaschine auf, die ein Arbeitsaggregat zur Erschütterung eines von der Gleisbaumaschine befahrenen Gleises umfasst. Zudem umfasst das System einen vom Arbeitsaggregat distanzierten Sensor zum Messen von über das Gleis übertragene Erschütterungen. Dabei umfasst die Gleisbaumaschine des Weiteren eine Auswerteeinrichtung, der eine Position des Sensors bezüglich des Arbeitsaggregates vorgegeben ist, wobei die Auswerteeinrichtung zur Ermittlung einer Korrelation zwischen mit dem Sensor erfassten Erschütterungswirkungen des Arbeitsaggregats und aktuellen Distanzen zwischen dem Arbeitsaggregat und dem Sensor eingerichtet ist. Das Resultat steht online einer Bedienperson der Gleisbaumaschine zur Verfügung, sodass rechtzeitig auf eine sich anbahnende Überschreitung von Richtwerten reagiert und eine solche nachweislich verhindert werden kann. Die Beeinflussung des Arbeitsaggregats erfolgt dabei manuell oder durch eine automatische Regelung von Prozessparametern. Zudem ist die Einhaltung von Grenzwerten in Echtzeit dokumentierbar.

In einer vorteilhaften Weiterbildung ist der Sensor mit einem Positionserfassungssystem und einer Sendeeinrichtung zur Übertragung von Positionsdaten gekoppelt, wobei die Gleisbaumaschine eine Empfangseinrichtung zum Empfang der Positionsdaten umfasst. Auf diese Weise erfolgt nach einer Positionsänderung des Sensors und/oder der Gleisbaumaschine eine automatisierte Aktualisierung der Positionsdaten, die der Auswerteeinrichtung in Bezug auf die Arbeitsaggregate vorgegeben werden.

In einer anderen vorteilhaften Weiterbildung ist der Sensor auf der Gleisbaumaschine angeordnet und insbesondere als ein an einem Schienenfahrwerk angeordneter Beschleunigungsaufnehmer ausgebildet. Damit ist eine Ausbreitung von Erschütterungen in Längsrichtung der Gleisbaumaschine erfassbar, um die Systemsteifigkeit des Gleises zu bestimmen. Mit diesen Ergebnissen ist die Beurteilung der Homogenität des Verdichtungserfolges eines Arbeitsaggregats (Stopfaggregat, Stabilisationsaggregat etc.), das ein Schotterbett des Gleises verdichtet, überprüfbar. Zudem ist das Tragverhalten des bearbeiteten Gleises bzw. des Untergrunds bestimmbar.

### Kurze Beschreibung der Zeichnungen

Die Erfindung wird nachfolgend in beispielhafter Weise unter Bezugnahme auf die beigefügten Figuren erläutert. Es zeigen in schematischer Darstellung:
- Fig. 1: Gleisbaumaschine mit Stopfaggregat und Stabilisationsaggregat
- Fig. 2: Gleisbaumaschine mit Erschütterungsausbreitung
- Fig. 3: Messanordnung im Grundriss
- Fig. 4: Diagramm der Erschütterungsausbreitung
- Fig. 5: Erschütterungsausbreitung in Längsrichtung
- Fig. 6: Phasenlage der Erschütterungsausbreitung

### Beschreibung der Ausführungsformen

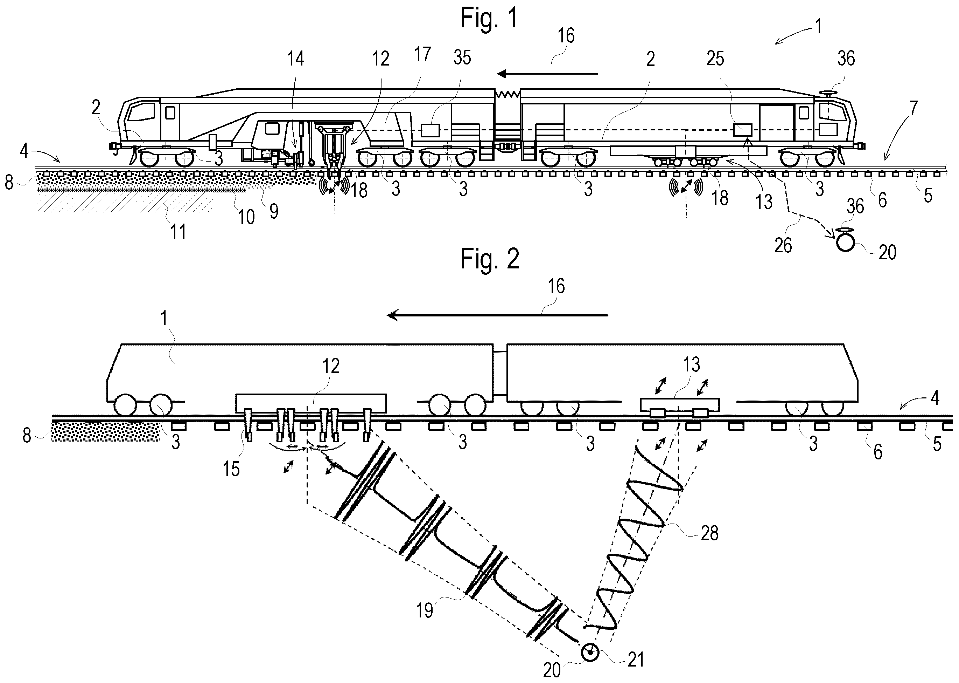

Die in Fig. 1 dargestellte Gleisbaumaschine 1 ist als kombiniert eine Stopfmaschine mit einem sogenannten Dynamischen Gleisstabilisator. Die Maschine 1 umfasst zwei gekoppelte Maschinenrahmen 2, die auf Schienenfahrwerken 3 auf einem Gleis 4 verfahrbar sind. Das Gleis 4 umfasst einen aus Schienen 5 und darauf befestigten Schwellen 6 bestehenden Gleisrost 7, der in einem Bett aus Gleisschotter 8 gelagert ist. Unter diesem Schotterbett befindet sich in der Regel eine Planumsschutzschicht (PSS) 9, die gegebenenfalls mit einer Zwischenschicht 10 als Tragschicht aus Recyclingmaterial auf einem Erdplanum bzw. Untergrund 11 aufgebracht ist.

Arbeitsaggregate sind beispielsweise ein Stopfaggregat 12 und ein Stabilisationsaggregat 13. Auch andere Arbeitsaggregate sind zur Einbringung von Erschütterungen in das Gleis 4 nutzbar, beispielsweise ein Vorkopfverdichter oder ein Zwischenfachverdichter. Das Stopfaggregat 12 stopft den Gleisschotter 8 unter dem Gleisrost 7, während dieser mittels eines Hebe-Richtaggregats 14 in einer Solllage gehalten wird. Konkret erfolgt der Stopfvorgang mittels paarweise gegenüberliegend angeordneter Stopfpickel 15, die in Schwellenfächer zwischen den Schwellen 6 eintauchen.

Das Stopfaggregat 12 umfasst einen Aggregatrahmen, in dem ein Werkzeugträger auf vertikalen Führungen gelagert ist. Am Werkzeugträger sind gegenüberliegenden Schwenkarme gelagert, die mit Vibration beaufschlagbar und zueinander beistellbar sind. Dazu ist ein oberer Hebelarm des jeweiligen Schwenkarms über einen zugeordneten Beistellantrieb mit einem Schwingungsantrieb (Vibrationsantrieb) gekoppelt. Beispielsweise ist ein Hydraulikzylinder einerseits mit dem zugeordneten Schwenkarm verbunden und andererseits an einer umlaufenden Exzenterwelle gelagert. Alternativ dazu kann ein Hydraulikzylinder zum Beistellen und zur Vibrationserzeugung eingerichtet sein. An einem unteren Hebelarm des jeweiligen Schwenkarms sind ein oder zwei Stopfpickel 15 befestigt.

Die Stopfpickel 15 werden durch den Schwingungsantrieb dynamisch angeregt (dynamisches Schließen und Öffnen einer aus den gegenüberliegenden Stopfpickel 15 gebildeten Zange). Mit dieser dynamischen Anregung wird der Gleisschotter 8 in einen fließähnlichen Zustand gebracht. Mittels des überlagerten Beistellvorgangs der gegenüberliegenden Stopfpickel 15 (langsames Schließen der Zange) wird der dynamisch mobilisierte Gleisschotter 8 unter die jeweilige Schwelle 6 gestopft.

Wie in Fig. 2 dargestellt kann ein Stopfaggregat 12 mehrere Reihen gegenüberliegender Stopfpickel 15 umfassen, damit mehrere Schwellen 6 simultan bearbeitet werden können. Jede dieser Reihen hat einen eigenen Schwingungsantrieb, wobei die Frequenz der dynamischen Anregung laufend dem Arbeitsprozess angepasst variiert wird. Dabei sollen die einzelnen Stopfpickelreihen mit annähernd gleicher Frequenz schwingen, wobei eine genaue Synchronisation der Phasenlage nicht zwingend erforderlich ist.

Während eines Arbeitsprozesses fährt die Gleisbaumaschine 1 mit konstanter langsamer Geschwindigkeit in Arbeitsrichtung 16. Dabei bewegt sich ein am Maschinenrahmen 2 gelagerter sogenannter Satellit 17 mit dem Stopfaggregat 12 zyklisch relativ zur Hauptmaschine vor und zurück. Auf diese Weise bleibt das Stopfaggregat 12 für die Dauer eines Stopfvorgangs über der jeweiligen Schwelle 6 positioniert. Nach Beendigung des Stopfvorgangs wird der Satellit 17 mit erhöhter Geschwindigkeit in Arbeitsrichtung 16 relativ zur Hauptmaschine vorwärtsbewegt. Nach dieser aufholenden Bewegung wird der Satellit 17 abgebremst und das Stopfaggregat 12 genau über den nächsten zu unterstopfenden Schwellen 5 positioniert.

Zu Beginn des darauffolgenden Stopfvorgangs werden die gegenüberliegenden Stopfpickel 15 mit hoher Anregungsfrequenz in den Gleisschotter 8 abgesenkt. In dieser Phase setzt die Erschütterungswirkung des Stopfaggregates 12 auf die Umgebung ein. Anschließend werden die Stopfpickelpaare unter geringerer Anregungsfrequenz langsam geschlossen (Beistellbewegung) und transportieren den dynamisch mobilisierten Gleisschotter 8 unter die jeweilige Schwelle 6. Zudem wird der unter der bearbeiteten Schwelle 6 befindliche Schotter 8 verdichtet. Abschließend werden die Stopfpickelpaare mit einer sich öffnenden Bewegung wieder aus dem Gleisschotter 8 gezogen, indem die Werkzeugträger des Stopfaggregats 12 nach oben bewegt werden. Konkret werden die im Stopfaggregat 12 in Aggregatrahmen gelagerte Werkzeugträger noch oben bewegt. Mit dem Kontaktverlust der Stopfpickel 15 zum Gleisschotter 8 ist die Erschütterungswirkung des Stopfaggregats 12 beendet.

Je nach Bedarf kann der gesamte oben beschriebene Bestellvorgang an einer Stelle mehrmals wiederholt werden. Danach holt der Satellit 17 den von der Hauptmaschine inzwischen zurückgelegten Weg wieder auf und positioniert sich genau über den nächsten zu bearbeitenden Schwellen 6.

Die für die Erschütterungswirkung relevante Daten jeder einzelnen Position des Satelliten 17 bzw. des Arbeitsaggregats 12 werden mittels einer Sensoranordnung 18 gemessen oder sind prozessbedingt bekannt. Diese Daten umfassen den Zeitpunkt des Bodenkontaktes der Stopfpickel 15 (Absenken), die Frequenz des Schwingungsantriebs, Beginn und Ende der Beistellbewegung, den Kontaktverlust der Stopfpickel 15 beim Anheben sowie die aktuelle Lage des Stopfaggregats 12 gegenüber dem Gleis 4.

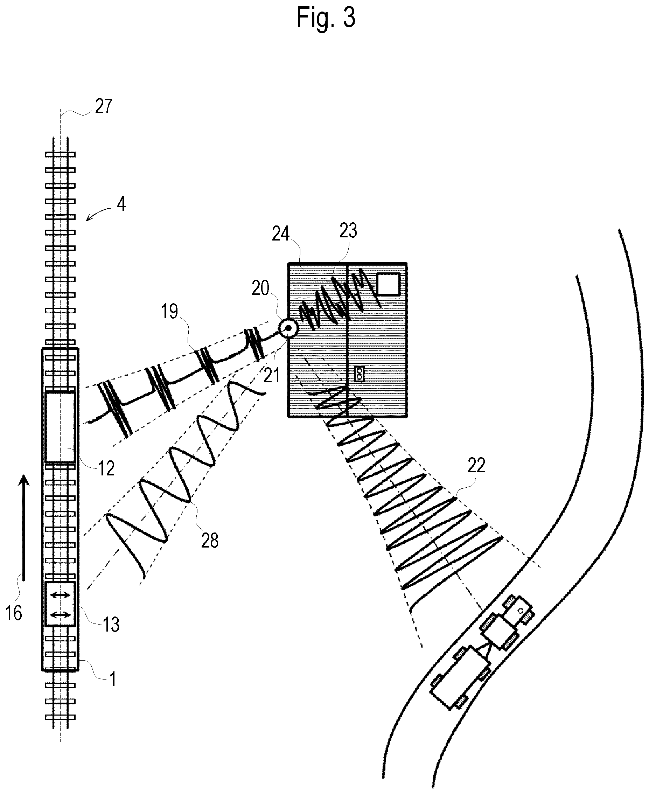

Charakteristisch für die Erschütterungswirkung des Stopfaggregats 12 ist dessen intermittierender Verlauf 19 (Ausbreitung der vom Stopfaggregat 12 verursachten Erschütterungen). Die Messverläufe der mittels eines Sensors 20 in der Umgebung gemessenen Erschütterungen 21 enthalten die Überlagerungen sämtlicher Erschütterungen aus dem Betrieb der Gleisbaumaschine 1 und umgebender externer und interner Erschütterungsquellen. In Fig. 3 sind beispielhaft Erschütterungen 22 einer externen Störquelle und Erschütterungen 23 einer internen, innerhalb eines überwachten Schutzobjekts 24 befindlichen Störquelle eingezeichnet. Durch den charakteristischen intermittierenden Verlauf 19 und die genaue Kenntnis der Kontaktzeit der Stopfpickel 15 mit dem Gleisschotter 8 ist es möglich, die Erschütterungswirkung des Stopfaggregats 12 von den übrigen gemessenen Erschütterungen zu unterscheiden.

In Kenntnis der momentanen Position des Stopfaggregats 12 und der fixen Position des Sensors 20 ist die momentane Distanz r zwischen Emissionsquelle (Arbeitsaggregat 12) und Messpunkt (Sensor 20) bekannt. Konkret werden einer Auswerteeinrichtung 25 die Positionen vorgegeben, um die aktuelle Distanz r zu ermitteln. Zudem werden der Auswerteeinrichtung 25 die mittels des Sensors 20 ermittelten Erschütterungswerte übermittelt. Dazu ist der Sensor 20 vorteilhafterweise über eine drahtlose Datenverbindung 26 mit der Auswerteeinrichtung 25 verbunden. In der Auswerteeinrichtung 25 ist ein Computerprogramm eingerichtet, mittels dem eine Korrelation zwischen der mit dem Sensor 20 erfassten Erschütterungswirkung des Arbeitsaggregats 12 und der Distanz r zwischen dem Arbeitsaggregat 12 und dem Sensor 20 ermittelt wird.

Das Stabilisationsaggregat 13 bewegt sich mit der Gleisbaumaschine 1 kontinuierlich in Arbeitsrichtung 16 entlang des Gleises 4. Dieses Aggregat 13 umfasst einen Richtschwinger, der mit stufenlos verstellbarer Amplitude eine horizontale (in Sonderfällen auch vertikale) dynamische Anregung normal zur Gleisachse 27 aufbringt. Das Stabilisationsaggregat 13 ist mittels Hydraulikzylinder gegen den Maschinenrahmen 2 abgestützt und drückt mit einer definierten Kraft auf den Gleisrost 7. Dabei hält das Stabilisationsaggregat 13 mit Spurkranzrollen (Spreizachse) und Klemmrollen (Rollenklemme) die Schienen 5 des Gleises 4 fest. Die durch die dynamische Anregung hervorgerufene Schwingung des Stabilisationsaggregats 13 wird dadurch auf das Gleis 4 und somit auf die Umgebung übertragen.

Mittels des Stabilisationsaggregats 13 wird das vorher mittels Hebe-Richtaggregat 14 und Stopfaggregat 12 in eine neue Lage gebrachte Gleis 4 in den Gleisschotter 8 eingerüttelt. Dabei wird der Gleisschotter 8 weiter verdichtet und somit die neue Gleislage stabilisiert. Mit diesem Prozess geht eine Erhöhung des Querverschiebewiderstands des Gleises 4 einher. Die für den Verdichtungsprozess erforderlichen Schwingungen 28 pflanzen sich im Untergrund 11 fort (Ausbreitung der vom Stabilisationsaggregat 13 verursachten Erschütterungen). In der Umgebung sind die resultierenden Erschütterungen 21 mittels des Sensors 20 messbar.

Es können auch mehrere Stabilisationsaggregate 13 hintereinander eingesetzt werden. Diese sind vorzugsweise mechanisch gekoppelt, sodass sie zwangsweise phasenrichtig miteinander synchronisiert sind. Bei entsprechender Entfernung des Sensors 20 (Ortes der Beobachtung) von den synchronisierten Stabilisationsaggregaten 13 ist deren Erschütterungswirkung nicht von jener eines entsprechend großen, fiktiven Einzelaggregats zu unterscheiden. In weiterer Folge wird deshalb nur die Wirkung eines einzelnen Stabilisationsaggregats 13 behandelt. Das Prinzip ist jedoch auf mehrere synchronisierte (gegebenenfalls auch nicht synchronisierte) Stabilisationsaggregate 13 anwendbar.

Die Charakteristik der Schwingung des Stabilisationsaggregats 13 ist dadurch gekennzeichnet, dass es sich um eine harmonische (sinusförmige) Anregung handelt. Die Frequenz und Phasenlage lassen sich mittels einer Sensoranordnung 18 genau ermitteln oder sind prozessbedingt bekannt. Die Erschütterungswirkung des Stabilisationsaggregats 13 ist bei der Analyse der Erschütterungen 21 mittels des Sensors 20 (Messpunkt) eindeutig von anderen Einflüssen auf die Messstelle zu unterscheiden. Aus der momentanen Position des Stabilisationsaggregats 13 und der fixen Position des Sensors 20 ist die momentane Distanz r zwischen Erschütterungsquelle und Messpunkt ermittelbar. Mittels der Auswerteeinrichtung 25 wird diese Distanz r mit der erfassten Erschütterungswirkung des Stabilisationsaggregats 13 korreliert.

Das Stopfaggregat 12 und das Stabilisationsaggregat 13 sind in diesem Verfahren als primäre Erschütterungsquellen definiert. Durch die beschriebene Charakteristik der von diesen Quellen 12, 13 hervorgerufenen Erschütterungen erfolgt eine Separation vom Rest der am Messpunkt wirkenden untergeordneten Erschütterungsquellen der Gleisbaumaschine 1 (Nebengeräusche) und Fremdeinwirkungen. Für diese Separation ist in der Auswerteeinrichtung 25 ein Computerprogramm eingerichtet, das den Verlauf der Resterschütterungen mit der Annäherung sowie der Entfernung der Gleisbaumaschine 1 zum Sensor 20 (Messpunkt) untersucht.

Mit zunehmender Datenlage, insbesondere mit mehreren Sensoren 20 (zahlreiche Messpunkte), werden die charakteristischen Muster der primären Erschütterungsquellen 12, 13 und der untergeordneten Erschütterungsquellen der Gleisbaumaschine 1 immer deutlicher erkennbar. Die auf die Gleisbaumaschine 1 zurückzuführenden Erschütterungen sind dadurch eindeutig von den Erschütterungen externer Erschütterungsquellen (Verkehr, andere Maschinen etc.) unterscheidbar. Dadurch sinkt mit fortschreitender Dauer des Verfahrens die für die Separierung der Erschütterungsquellen erforderliche Rechenleistung.

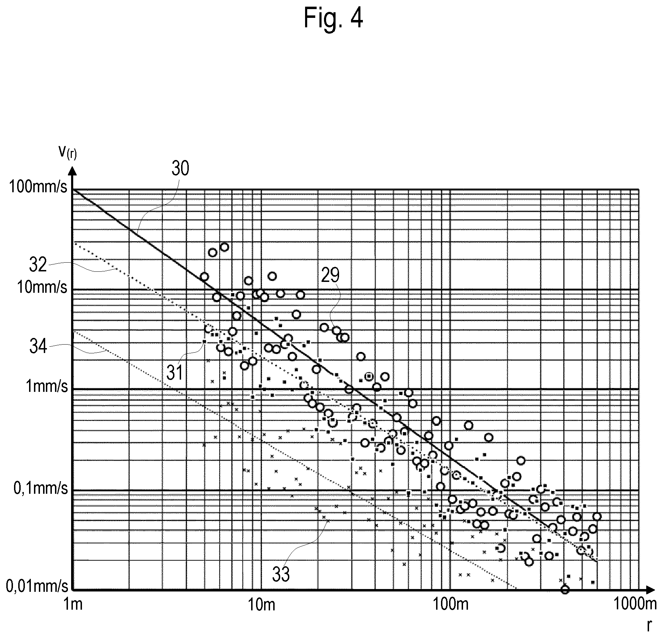

In Fig. 4 sind die Korrelationen zwischen den Erschütterungen und dem Abstand der dynamischen Anregung zur Position der Messung in idealisierter Weise in einem doppelt logarithmischen Diagramm skizziert. Konkret ist auf der Abszisse die Distanz r zwischen der Erschütterungsquelle (Arbeitsaggregat 12, 13) und dem Sensor 20 aufgetragen. Auf der Ordinate ist als Feldgröße der Erschütterung die Schwingschnelle v₍ᵣ₎ aufgetragen. Messwerte 29 der Erschütterungen des Stopfaggregats 12 sind mit kleinen Kreisen eingezeichnet. Eine Funktion 30 der Erschütterungsausbreitung der Erschütterungen durch das Stopfaggregat 12 ist als durchgezogene Linie eingezeichnet. Diese Linie ergibt sich aus der besten Anpassung einer exponentiellen Abklingfunktion an die Messwerte 29 und ist im doppelten logarithmischen Diagramm eine Gerade.

Messwerte 31 der Erschütterungen des Stabilisationsaggregats 13 sind als kleine Quadrate eingezeichnet. Dabei ist eine fixierte Einstellung der Amplitude angenommen. Eine Funktion 32 der Erschütterungsausbreitung der Erschütterungen durch das Stabilisationsaggregat 13 ist als dick punktierte Linie eingezeichnet und ergibt sich aus der zugehörigen besten Anpassung.

Messwerte 33 der auf untergeordnete Quellen zurückzuführenden Erschütterungen der Gleisbaumaschine 1 (Nebengeräusche) sind als kleine Kreuze eingezeichnet. Eine Funktion 34 der Erschütterungsausbreitung der untergeordneten Erschütterungen ist als dünn gepunktete Gerade eingezeichnet und ergibt sich wiederum aus der zugehörigen besten Anpassung.

Die in Fig. 4 dargestellten Zusammenhänge sind mittels eines Computerprogramms auswertbar, das in der Auswerteeinrichtung 25 implementiert ist. Damit werden in Echtzeit vor Ort rasch zutreffende Prognosen über die zu erwartenden Erschütterungen erstellen. Auf Basis dieser Prognosen wird mittels eines Algorithmus entschieden, ob bei weiterer Annäherung an ein mittels des Sensors 20 überwachtes Schutzobjekt 24 Maßnahmen zur Reduktion der Erschütterungen erforderlich werden. Beispielsweise vergleicht der Algorithmus die aktuellen Messwerte mit einem Schwellenwert, der nicht überschritten werden darf.

Zur Beeinflussung der Erschütterungen ist die Auswerteeinrichtung 25 mit einer Maschinensteuerung 35 gekoppelt. Beispielsweise wird bei drohender Grenzwertüberschreitung der Maschinensteuerung 35 eine Reduktion einer Vibrationsamplitude vorgegeben. Resultat dieser Maßnahme ist das Zurückregeln der Amplitude des Stopfaggregats 12 und/oder des Stabilisationsaggregats 13. Die Wirksamkeit der Maßnahme wird sofort anhand der fortlaufend erfassten Messwerte 29, 31, 33 erkennbar.

Die Dokumentation der Einhaltung der zuvor definierten Richt- und Grenzwerte geschieht anhand der Messwertverläufe, wobei Überschreitungen durch Fremdeinwirkung gekennzeichnet werden können. Somit erlaubt das Verfahren eine nachweislich reproduzierbare Zuordnung der gemessenen Erschütterungen 21 zu den Erregerquellen (Stopfaggregat 12, Stabilisationsaggregat 13, untergeordnete Erschütterungsquellen der Gleisbaumaschine 1 sowie externe Erregerquellen, die nicht in die Sphäre der Gleisbaumaschine 1 fallen).

Mittels der ortsfesten Sensoren 20 werden Beschleunigung oder Schwingschnellen v₍ᵣ₎ in drei orthogonalen Raumrichtungen gemessen. Die gegebenenfalls bereits lokal teilanalysierten Messwerte 29, 31, 33 werden in Kombination mit der Position des jeweiligen Sensors 20 drahtlos zur Auswertung an die Auswerteeinrichtung 25 der Gleisbaumaschine 1 gesendet. Beispielsweise ist jeder Sensor 20 gemeinsam mit einer GNSS-Empfangseinrichtung 36 in einem gemeinsamen Gehäuse angerordnet. Die Auswerteeinrichtung 25 kann in eine bestehende Prozessoreinheit der Gleisbaumaschine 1 integriert sein.

Auf der Gleisbaumaschine 1 werden am Stopfaggregat 12 mittels Sensoreinrichtung 18 weitere Daten erfasst. Konkret werden die Beschleunigung zumindest eines Stopfpickels 15, der Verlauf der Vibrationsfrequenz sowie die Zeitpunkte der Kontaktphasen (Beginn und Ende der Kontaktdauer des Stopfpickels 15 mit dem Gleisschotter 8). Ein Verfahren und eine Vorrichtung zur Erfassung dieser Daten sind in der Veröffentlichung AT 520 056 A1 derselben Anmelderin offenbar. Zudem wird mittels eines GNSS-Empfangsmoduls 36 und/oder durch interne Vermessung die aktuelle Position des Stopfaggregats 12 aufgezeichnet.

Im Richtschwinger des Stabilisationsaggregats 13 werden gewöhnlich rotierende Unwuchten für die Schwingungserzeugung genutzt. Die Stellungen dieser Unwuchten (Phasen) und die Beschleunigung der auf den Gleisrost 7 übertragenen Schwingungen werden beispielsweise mittels einer Sensoranordnung 18 gemessen. Ebenso werden eine momentane Einstellung der stufenlos verstellbaren Amplitude und die momentane Position des Stabilisationsaggregats 13 aufgezeichnet (GNSS-Empfänger 36 und/oder interne Vermessung).

Als Beurteilungskriterium der Erschütterung kann ein Scheitelwert vᵣ der vektoriell addierten Schwingschnellen herangezogen werden. Dieser Wert geht aus geltenden Richtlinien und Normen (z.B. ÖNORM S 9020, Erschütterungsschutz für ober- und unterirdische Anlagen) hervor: ${v}_{r} = \sqrt{{v}_{x}^{2} + {v}_{y}^{2} + {v}_{z}^{2}}$ Hierbei sind v_{X}, v_{y} und v_{z} die gemessenen Schwingschnellen in den drei orthogonalen Raumrichtungen. Auch andere Beurteilungsgrößen wie beispielsweise die bewertete Schwingstärke KB_{F}(t) gemäß DIN 4150-2 können herangezogen werden.

Als exponentielles Ausbreitungsgesetz (Abklingfunktion) ist folgende Formel anwendbar: ${v}_{\left(r\right)} = {v}_{\left(1\right)} ⋅ {r}^{D}$
v₍ᵣ₎ ... Schwingschnelle (Scheitelwert der vektoriell addierten Raumkomponenten) im Abstand r zwischen Erregerquelle und Position der Prognose;
v₍₁₎ ... theoretische Schwingschnelle im Abstand von 1 Meter (das Ausbreitungsgesetz gilt jedoch erst im Fernfeld);
D ... Abklingexponent (Neigung der Ausgleichsgeraden im doppelt logarithmischen Diagramm in Fig. 4).
Neben dem einfachen Ausbreitungsgesetz gemäß der angegebenen Formel können auch andere Ausbreitungsgesetzte bzw. spline-Funktionen (best fit) Verwendung finden.

Mit der erfindungsgemäß eingesetzten Sensorik und Methodik ist es möglich, die Messungen an der Gleisbaumaschine 1 und jene an instrumentierten ortsfesten Punkten in Echtzeit unter Berücksichtigung der geometrischen Verhältnisse (Abstand) in eine Relation zu bringen und somit zuverlässige Erschütterungen durch die Gleisbaumaschine 1 verlässlich und nachweislich zu unterbinden.

Beim Verfahren mit Bezug auf Fig. 3 werden im Vorfeld oder während der Gleisbearbeitung beim Schutzgut (Wohnräume, Bauwerke, schwingungsanfällige Subkonstruktionen etc.) Sensoren 20 angebracht. Bei einem fallweise abgedecktem Sensor 20, bei dem keine automatische Positionsbestimmung mittels GNSS möglich ist, wird die Position des Sensors 20 bzw. die Distanz zu den Arbeitsaggregaten 12, 13 manuell eingegeben.

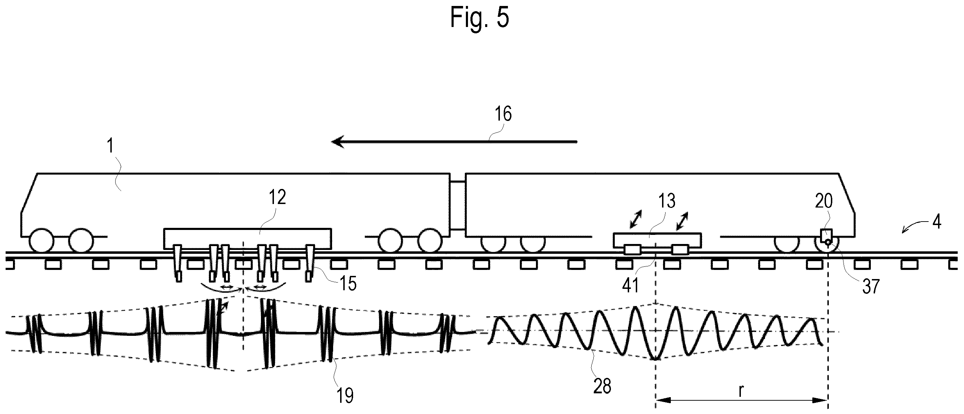

Bei einem weiteren von der Erfindung umfassten Verfahren erfolgt eine fahrzeuggebundene Messung der Systemsteifigkeit des Gleises 4. Um eine solche fahrzeuggebundene Messung der Erschütterungsausbreitung in Längsrichtung der Gleisbaumaschine 1 vorzunehmen, werden ausgewählte Messachsen 37 mit einem Sensor 20 ausgestattet. Dieser misst die Erschütterungen in Abstand r zum jeweiligen Arbeitsaggregat 12, 13. Dabei bleibt die jeweilige Distanz r₁ zwischen den Messachsen 37 bzw. Sensoren 20 und dem Stabilisationsaggregat 13 kontant. Bei einer Anordnung mit einem Satelliten 17 ist die Distanz zum Stopfaggregat 13 variabel, aber stets bekannt. Fig. 5 zeigt das Messprinzip exemplarisch anhand der Instrumentierung einer einzigen Messachse 37.

Durch die bekannte und konstante Frequenz des Stabilisationsaggregats 13 (horizontal und/oder vertikal angeregt) ist es möglich, die entsprechenden Frequenzanteile aus einem Messsignal des Sensors 20 von anderen Erschütterungen zu separieren und zu analysieren. Dabei werden die Amplituden der Signale ermittelt und die Phasenlagen zu der dynamischen Anregung durch das Stabilisationsaggregat 13 untersucht. Etwaige Veränderungen der Erschütterungen sind auf einfache Weise dem Gleis 4 und dem Untergrund 11 zuzuordnen, wenn die Prozessparameter der Gleisbaumaschine 1 konstant gehalten werden (Fahrgeschwindigkeit, Frequenz, Amplitude, Anpressdruck etc.). Je steifer der Gleisrost 7 und der Untergrund 11 sind, desto höher ist die Fortpflanzungsgeschwindigkeit der Oberflächenwellen. Die Homogenität des Tragverhaltens des Gleises 4 kann somit arbeitsintegriert überprüft werden.

Unter Berücksichtigung der Dispersion der Oberflächenwellen (unterschiedliche Fortpflanzungsgeschwindigkeit unterschiedlicher Frequenzen) sowie des variablen Abstandes können zusätzlich oder alternativ auch die Erschütterungen des Stopfaggregats 12 zur Steifigkeitsanalyse herangezogen werden.

Mehrere Messachsen 37 (Achsen der Schienenfahrwerke 3 mit Sensoren 20) ermöglichen eine verlässliche Bestimmung des Wellenfeldes sowie der Fortpflanzungsgeschwindigkeit der Erschütterungen und somit der Homogenität der Steifigkeitsverhältnisse.

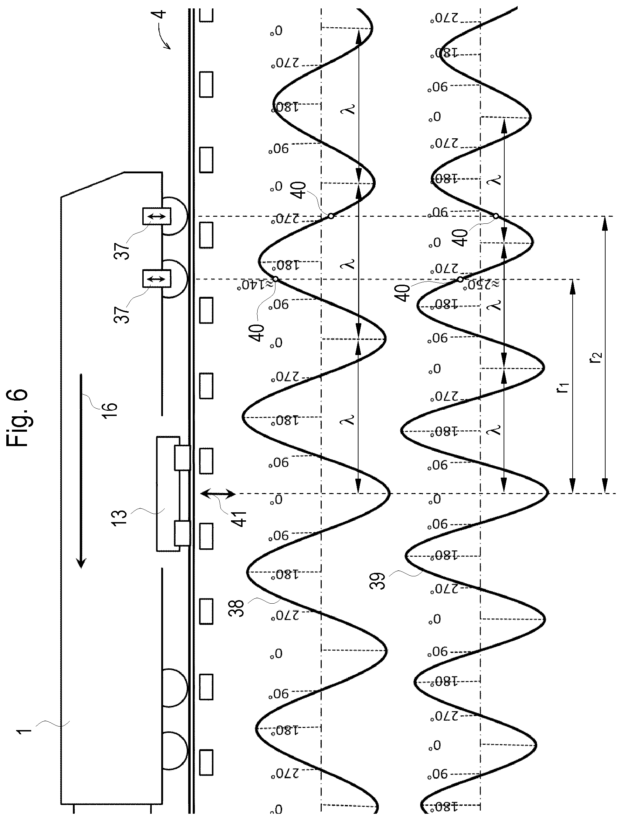

Das Messprinzip wird mit Bezug auf Fig. 6 erläutert. Im hinteren Teil der mit konstanter Geschwindigkeit bewegten Gleisbaumaschine 1 befindet sind das Stabilisationsaggregat 13, welches den Gleisrost 7 mit konstanter Frequenz vertikal anregt. Die Maschine 1 befährt den Gleisrost 7, der eine definierte Masse und in der jeweiligen dynamischen Anregungsrichtung (z.B. vertikal) eine definierte Biegesteifigkeit aufweist. Je steifer ein Biegeträger ist, desto schneller ist die Fortpflanzungsgeschwindigkeit der Wellen und desto länger ist die Wellenlänge λ. Durch die Wellendispersion haben Wellen mit hoher Frequenz im Biegeträger eine größere Fortpflanzungsgeschwindigkeit als niederfrequente Wellen.

Der Gleisrost 7 ruht auf dem Schotterbett 8, dem Oberbau des Gleises 4, sowie dem Unterbau und dem Untergrund 11. Je steifer der gesamte Aufbau ist, desto schneller ist die Fortpflanzungsgeschwindigkeit der Wellen und desto länger ist die Wellenlänge λ. Gemäß der Halbraumtheorie gilt jedoch auch ein gegenläufiger Zusammenhang zum Biegeträger. Durch die Wellendispersion haben Wellen mit hohen Frequenzen im elastisch isotropen Halbraum eine geringere Fortpflanzungsgeschwindigkeit als niederfrequente Wellen.

Gemessen wird punktuell der reale Schwingungszustand des dynamischen Interaktionssystems, das folgende Systemkomponenten umfasst:
Stabilisationsaggregat 13 (definierte Anregung), Gleisrost 7, geschichteter Aufbau (Oberbau, Unterbau), Untergrund 11 sowie gefederte Radsätze der Schienenfahrwerke 3. An definierten Positionen der Gleisbaumaschinen 1 sind Sensoren 20 angebracht. Beispielsweise sind Achsen der gefederten Radsätze als Messachsen 37 ausgebildet. Alternativ dazu ist ein berührungsloses optisches oder sonstiges Messsystem zur Erfassung der Erschütterungen einsetzbar. Vorteilhafterweise wird in der Auswerteeinrichtung 25 mittels eines dafür eingerichteten Computerprogramms ein numerisches Modell dieses Interaktionssystems ermittelt. Dieses numerische Modell dient in weiterer Folge zur Prognostizierung der Erschütterungswirkung der Arbeitsaggregate 12, 13 in der Umgebung der Gleisbaumaschine 1.

Die Oberflächenwellen sind in idealisierter Weise für ein steifes Verhalten (Schwingungsform 38) und für ein weiches Verhalten (Schwingungsform 39) des Interaktionssystems dargestellt. Dabei wird sichtbar, dass die Wellenlänge λ unter steiferen Verhältnissen länger ist als unter weichen Verhältnissen. In beiden Fällen ist die Phasenlage in Bezug auf die Anregung eingetragen (0°, 90°, 180°, 270° usw.).

Durch die punktuelle Messung ist nicht die gesamte skizzierte Wellenform direkt ersichtlich, sondern nur eine jeweilige Phasenlage 40 an den Messstellen 37 bekannt. Wie viele ganzzahlige Vielfache von 360° zwischen einer Anregungsstelle 41 und der jeweiligen Messstelle 37 liegen, ist beim eingeschwungenen Zustand mit konstanter Frequenz vorerst unbekannt. Durch die Verfolgung des Anlaufvorganges bzw. durch eine gezielte Frequenzvariation kann dies jedoch herausgefunden und die absolute Wellenlänge λ ermittelt werden.

Je mehr Messachsen 37 angeordnet sind, desto eindeutiger und genauer ist die Bestimmung der Wellenlängen λ. Mittels einer numerischen Simulation des gesamten Interaktionssystems ist eine entsprechende Interpretation der Messergebnisse durchführbar.

Eine einfache, jedoch äußerst genaue Beurteilung der Änderungen der Steifigkeitsverhältnisse des Interaktionssystems ist bereits mit einer einzelnen Messstelle 37 möglich, ohne die genauen Parameter des gesamten Interaktionssystems wissen zu müssen. Ändert sich die Phasenlage 40, weil die Verhältnisse weicher werden, geht zum Beispiel die obere Schwingungsform 38 in die untere Schwingungsform 39 über. An der vorderen Messstelle 37 würde sich diese Veränderung mit einer Zunahme des Phasenwinkels von ca. 140° auf ca. 250° bemerkbar machen.

Auf diese Weise ist die Erkennung der Steifigkeitsänderung (relative Messung) bereits durch die Beobachtung der Phasenlage 40 an einer einzelnen Messstelle 37 verlässlich möglich, indem ein zunehmender Phasenwinkel ein Indikator für ein Abnehmen der Systemsteifigkeit ist und umgekehrt. Die Nulldurchgänge werden dabei laufend mitgezählt. Sie beschreiben die Änderung der Anzahl von Wellenlängen λ innerhalb der Distanz r zwischen Anregungsstelle 41 und Messstelle 37.

Die Änderungen der gesamten Systemsteifigkeit sind auf die Änderungen in der Gleisbettung (Oberbau, Unterbau und Untergrund) zurückführbar, wenn die Maschinenparameter unverändert bleiben und wenn durch Überprüfung der Schienenbefestigungen sichergestellt ist, dass der Gleisrost 7 konstante Steifigkeitseigenschaften besitzt.

Für eine berührungslose Überprüfung der Schienenbefestigungen ist das Stabilisationsaggregat 13 nutzbar. Dabei werden mittels einer Spreizachse des Stabilisationsaggregats 13 variierte Spreizkräfte auf die Schienen 5 ausgeübt. Gleichzeitig wird mittels einer geeigneten Sensorik laufend die aktuelle Spurweite des Gleisrostes 7 an der Anregungsstelle 41 erfasst. Auftretende Veränderungen der Spurweite lassen Rückschlüsse auf den Zustand der Schienenbefestigungen zu. Beispielsweise führt eine lockere Schienenbefestigung bei wirkender Spreizkraft infolge einer Schienenkopfauslenkung zu einer Vergrößerung der gemessenen Spurweite.

Eine Schwingungsübertragung vom Erreger (Stabilisationsaggregat 13) über den Rahmen der Gleisbaumaschine 1 zur Messachse 37 ist durch eine dynamische Entkopplung vermeidbar.

Die beschriebene Methode der fahrzeuggebundenen Messung ist eine von mehreren Beurteilungsmethoden mittels einer Gleisbaumaschine 1. Weitere Verfahren sind in der AT 520 056 A1 in der AT 521 481 A1 derselben Anmelderin offenbart. Durch die unterschiedliche Sensibilität und den unterschiedlichen gemessenen Bereich des Gleises 4 resultieren Vorteile aus einer methodenübergreifenden Interpretation des Gleiszustands. Unterschiedliche Inhomogenitäten, welche durch die einzelnen Methoden detektierte werden, sind in einer Zusammenschau besser interpretierbar. Insbesondere kann eine bessere Zuordnung zu den einzelnen Konstruktionselementen des Gleises 4 erfolgen. Auf diese Weise trägt die vorliegende Erfindung dazu bei, insgesamt die Beurteilung des Gleiszustandes in Echtzeit zu verbessern.

## Patentansprüche

1. Verfahren zur Ermittlung einer Erschütterungsübertragung im Bereich eines Gleises (4), wobei das Gleis (4) während eines Arbeitsprozesses mittels eines Arbeitsaggregats (12, 13) einer am Gleis (4) fahrenden Gleisbaumaschine (1) erschüttert wird, wobei über das Gleis (4) übertragene Erschütterungen (19, 28) mittels eines vom Arbeitsaggregat (12, 13) distanzierten Sensors (20) gemessen werden und wobei in einer Auswerteeinrichtung (25) Messdaten des Sensors (20) ausgewertet werden, **dadurch gekennzeichnet, dass** der Auswerteeinrichtung (25) eine Position des Sensors (20) bezüglich des Arbeitsaggregats (12, 13) vorgegeben wird und dass in der Auswerteeinrichtung (25) eine Korrelation zwischen mit dem Sensor (20) erfassten Erschütterungswirkungen des Arbeitsaggregats (12, 13) und aktuellen Distanzen (r) zwischen dem Arbeitsaggregat (12, 13) und dem Sensor (20) ermittelt wird.

2. Verfahren nach Anspruch 1, **dadurch gekennzeichnet, dass** zur Ermittlung der Erschütterungswirkung des Arbeitsaggregats (12, 13) mittels des Sensors (20) eine Beschleunigung und/oder Schwingschnelle (v₍ᵣ₎) gemessen wird.

3. Verfahren nach Anspruch 1 oder 2, **dadurch gekennzeichnet, dass** Messdaten des Sensors (20) und vorzugsweise Positionsdaten des Sensors (20) über eine drahtlose Datenverbindung (26) an die Auswerteeinrichtung (25) übertragen werden.

4. Verfahren nach einem der Ansprüche 1 bis 3, **dadurch gekennzeichnet, dass** der Auswerteieinrichtung (25) charakteristische Parameter einer vom Arbeitsaggregat (12, 13) erzeugten Schwingung vorgegeben werden und dass die Messdaten mit diesen charakteristischen Parametern abgeglichen werden.

5. Verfahren nach Anspruch 4, **dadurch gekennzeichnet, dass** das Gleis (4) mittels mehrerer Arbeitsaggregate (12, 13) der Gleisbaumaschine (1) an voneinander distanzierten Stellen (41) erschüttert wird und dass die Messdaten anhand der jeweiligen charakteristischen Parameter der vom jeweiligen Arbeitsaggregat (12, 13) erzeugten Schwingung dem entsprechenden Arbeitsaggregat (12, 13) zugeordnet werden.

6. Verfahren nach einem der Ansprüche 1 bis 5, **dadurch gekennzeichnet, dass** mittels der Auswerteeinrichtung (25) aus der ermittelten Korrelation eine Übertragungsfunktion und/oder eine Abklingfunktion abgeleitet wird.

7. Verfahren nach Anspruch 6, **dadurch gekennzeichnet, dass** mittels der Auswerteeinrichtung (25) mit der Übertragungsfunktion und/oder Abklingfunktion eine laufende Erschütterungsprognose errechnet wird.

8. Verfahren nach einem der Ansprüche 1 bis 7, **dadurch gekennzeichnet, dass** der Auswerteinrichtung (25) die Positionen mehrerer Sensoren (20) vorgegeben werden und dass in der Auswerteinrichtung (25) für jeden Sensor (20) eine Korrelation zwischen den erfassten Erschütterungswirkungen und den der zugehörigen Distanzen (r) zwischen Arbeitsaggregat (12, 13) und Sensor (20) ermittelt wird.

9. Verfahren nach einem der Ansprüche 1 bis 8, **dadurch gekennzeichnet, dass** die Gleisbaumaschine (1) in Abhängigkeit einer Ausgangsgröße der Auswerteeinrichtung (25) automatisiert gesteuert wird.

10. Verfahren nach Anspruch 9, **dadurch gekennzeichnet, dass** die Ausgangsgröße mit einem Schwellenwert verglichen wird und dass insbesondere bei Annäherung der Ausgangsgröße an den Schwellenwert ein Prozessparameter des Arbeitsprozesses geändert wird.

11. Verfahren nach einem der Ansprüche 1 bis 10, **dadurch gekennzeichnet, dass** eine Erschütterungsausbreitung (19, 28) in Gleislängsrichtung mittels eines an der Gleisbaumaschine (1) angeordneten Sensors (20) erfasst wird.

12. Verfahren nach einem der Ansprüche 1 bis 11, **dadurch gekennzeichnet, dass** ein numerisches Modell eines aus Gleisbaumaschine (1) und Gleis (4) gebildeten Interaktionssystems errechnet wird und dass insbesondere mittels des numerischen Modells bodenmechanische Parameter errechnet werden.

13. System zur Durchführung eines Verfahren nach einem der Ansprüche 1 bis 12, mit einer Gleisbaumaschine (1), die ein Arbeitsaggregat (12, 13) zur Erschütterung eines von der Gleisbaumaschine (1) befahrenen Gleises (4) umfasst, und mit einem vom Arbeitsaggregat (12, 13) distanzierten Sensor (20) zum Messen von über das Gleis (4) übertragene Erschütterungen (19, 28), **dadurch gekennzeichnet, dass** die Gleisbaumaschine (1) eine Auswerteeinrichtung (25) umfasst, der eine Position des Sensors (20) bezüglich des Arbeitsaggregates (12, 13) vorgegeben ist und dass die Auswerteeinrichtung (25) zur Ermittlung einer Korrelation zwischen mit dem Sensor (20) erfassten Erschütterungswirkungen des Arbeitsaggregats (12, 13) und aktuellen Distanzen (r) zwischen dem Arbeitsaggregat (12, 13) und dem Sensor (20) eingerichtet ist.

14. System nach Anspruch 13, **dadurch gekennzeichnet, dass** der Sensor (20) mit einem Positionserfassungssystem und einer Sendeeinrichtung zur Übertragung von Positionsdaten gekoppelt ist und dass die Gleisbaumaschine (1) eine Empfangseinrichtung zum Empfang der Positionsdaten umfasst.

15. System nach Anspruch 13, **dadurch gekennzeichnet, dass** der Sensor (20) auf der Gleisbaumaschine (1) angeordnet und insbesondere als ein an einem Schienenfahrwerk (3) angeordneter Beschleunigungsaufnehmer ausgebildet ist.

## Claims

1. A method for detecting vibrations transmitted in the area of a track (4), with the track (4) being vibrated during a work process by means of a work unit (12, 13) of a track maintenance machine (1) travelling along the track (4), with vibrations (19, 28) transmitted via the track (4) being measured by means of a sensor (20) distanced from the work unit (12, 13) and with measuring data of the sensor (20) being evaluated in an evaluation device (25), **characterised in that** a position of the sensor (20) with respect to the work unit (12, 13) is given to the evaluation device (25), and that a correlation between vibration effects of the work unit (12, 13) detected with the sensor (20) and current distances (r) between the work unit (12, 13) and the sensor (20) is calculated in the evaluation device (25).

2. A method according to claim 1, **characterised in that** an acceleration and/or a vibration velocity (v₍ᵣ₎) is measured by means of the sensor (20) to detect the vibration effect of the work unit (12, 13).

3. A method according to claim 1 or 2, **characterised in that** measuring data of the sensor (20) and preferably position data of the sensor (20) are transmitted to the evaluation device (25) via a wireless data connection (26).

4. A method according to one of the claims 1 to 3, **characterised in that** characteristic parameters of a vibration generated by the work unit (12, 13) are given to the evaluation device (25) and that the measuring data are compared with these characteristic parameters.

5. A method according to claim 4, **characterised in that** the track (4) is vibrated by means of several work units (12, 13) of the track maintenance machine (1) at points (41) that are distanced from each other, and that the measuring data are assigned to the corresponding work unit (12, 13) on the basis of the respective characteristic parameters of the vibration generated by the respective work unit (12, 13).

6. A method according to one of the claims 1 to 5, **characterised in that** a transmission function and/or a decay function is derived from the detected correlation by means of the evaluation device (25).

7. A method according to claim 6, **characterised in that** a continuous vibration forecast is calculated by means of the evaluation device (25) using the transmission function and/or decay function.

8. A method according to one of the claims 1 to 7, **characterised in that** the positions of several sensors (20) are given to the evaluation device (25), and that a correlation between the detected vibration effects and the associated distances (r) between the work unit (12, 13) and the sensor (20) is calculated in the evaluation device (25) for each sensor (20).

9. A method according to one of the claims 1 to 8, **characterised in that** the track maintenance machine (1) is controlled automatically, depending on an output value of the evaluation device (25).

10. A method according to claim 9, **characterised in that** the output value is compared with a threshold value, and that a process parameter of the work process is changed, in particular when the output value approaches the threshold value.

11. A method according to one of the claims 1 to 10, **characterised in that** a vibration propagation (19, 28) in the longitudinal direction of the track is detected by means of a sensor (20) arranged on the track maintenance machine (1).

12. A method according to one of the claims 1 to 11, **characterised in that** a numerical model of an interaction system formed by the track maintenance machine (1) and the track (4) is calculated, and that soil-mechanical parameters are calculated in particular by means of the numerical model.

13. A system for carrying out a method according to one of the claims 1 to 12, having a track maintenance machine (1) comprising a work unit (12, 13) for vibrating a track (4) travelled on by the track maintenance machine (1), and having a sensor (20) distanced from the work unit (12, 13) to measure vibrations (19, 28) transmitted via the track (4), **characterised in that** the track maintenance machine (1) comprises an evaluation device (25) that is given a position of the sensor (20) with respect to the work unit (12, 13), and that the evaluation device (25) is set up to calculate a correlation between vibration effects of the work unit (12, 13) detected with the sensor (20) and current distances (r) between the work unit (12, 13) and the sensor (20).

14. A system according to claim 13, **characterised in that** the sensor (20) is coupled with a position detection system and a transmission device for transmitting position data, and that the track maintenance machine (1) comprises a receiving device for receiving the position data.

15. A system according to claim 13, **characterised in that** the sensor (20) is arranged on the track maintenance machine (1) and is designed in particular as an acceleration sensor arranged on a rail-based running gear (3).

## Revendications

1. Procédé de détermination d'une transmission de secousse dans la région d'une voie ferrée (4), dans lequel la voie ferrée (4) est secouée pendant un processus de travail au moyen d'un module de travail (12, 13) d'une machine de pose de voie (1) roulant sur la voie ferrée (4), dans lequel des secousses (19, 28) transmises au-dessus de la voie ferrée (4) sont mesurées au moyen d'un capteur (20) écarté du module de travail (12, 13) et dans lequel des données de mesure du capteur (20) sont évaluées dans une installation d'évaluation (25), **caractérisé en ce qu'**une position du capteur (20) par rapport au module de travail (12, 13) est prédéfinie au niveau de l'installation d'évaluation (25) et qu'une corrélation entre des effets de secousse détectés avec le capteur (20) du module de travail (12, 13) et des distances actuelles (r) entre le module de travail (12, 13) et le capteur (20) est déterminée dans l'installation d'évaluation (25).

2. Procédé selon la revendication 1, **caractérisé en ce qu'**une accélération et/ou vélocité d'oscillation (v₍ᵣ₎) est mesurée au moyen du capteur (20) pour la détermination de l'effet de secousse du module de travail (12, 13).

3. Procédé selon la revendication 1 ou 2, **caractérisé en ce que** des données de mesure du capteur (20) et de préférence des données de position du capteur (20) sont transmises à l'installation d'évaluation (25) par le biais d'une connexion de données sans fil (26).

4. Procédé selon une des revendications 1 à 3, **caractérisé en ce que** des paramètres caractéristiques d'une oscillation générée par le module de travail (12, 13) sont prédéfinis au niveau de l'installation d'évaluation (25) et que les données de mesure sont ajustées avec ces paramètres caractéristiques.

5. Procédé selon la revendication 4, **caractérisé en ce que** la voie ferrée (4) est secouée au moyen de plusieurs modules de travail (12, 13) de la machine de pose de voie (1) à des emplacements écartés l'un de l'autre (41) et que les données de mesure sont associées au module de travail correspondant (12, 13) à l'aide des paramètres caractéristiques respectifs de l'oscillation générée par le module de travail respectif (12, 13).

6. Procédé selon une des revendications 1 à 5, **caractérisé en ce qu'**une fonction de transmission et/ou une fonction d'amortissement est dérivée de la corrélation déterminée au moyen de l'installation d'évaluation (25).

7. Procédé selon la revendication 6, **caractérisé en ce qu'**un pronostic de secousse en cours est calculé avec la fonction de transmission et/ou fonction d'amortissement au moyen de l'installation d'évaluation (25).

8. Procédé selon une des revendications 1 à 7, **caractérisé en ce que** les positions de plusieurs capteurs (20) sont prédéfinies au niveau de l'installation d'évaluation (25) et qu'une corrélation entre les effets de secousse détectés et les distances associées (r) entre module de travail (12, 13) et capteur (20) est déterminée pour chaque capteur (20) dans l'installation d'évaluation (25).

9. Procédé selon une des revendications 1 à 8, **caractérisé en ce que** la machine de pose de voie (1) est commandée de manière automatisée en fonction d'une grandeur de départ de l'installation d'évaluation (25).

10. Procédé selon la revendication 9, **caractérisé en ce que** la grandeur de départ est comparée à une valeur seuil et qu'un paramètre de processus du processus de travail est notamment modifié en cas d'approche de la grandeur de départ de la valeur seuil.

11. Procédé selon une des revendications 1 à 10, **caractérisé en ce qu'**une propagation de secousse (19, 28) dans la direction longitudinale de voie est détectée au moyen d'un capteur (20) disposé sur la machine de pose de voie (1).

12. Procédé selon une des revendications 1 à 11, **caractérisé en ce qu'**un modèle numérique d'un système d'interaction formé de la machine de pose de voie (1) et la voie ferrée (4) est calculé et que des paramètres mécaniques du sol sont notamment calculés au moyen du modèle numérique.

13. Système de réalisation d'un procédé selon une des revendications 1 à 12, avec une machine de pose de voie (1) qui comprend un module de travail (12, 13) pour la secousse d'une voie ferrée (4) parcourue par la machine de pose de voie (1), et avec un capteur (20) écarté du module de travail (12, 13) pour la mesure de secousses (19, 28) transmises au-dessus de la voie ferrée (4), **caractérisé en ce que** la machine de pose de voie (1) comprend une installation d'évaluation (25) au niveau de laquelle une position du capteur (20) par rapport au module de travail (12, 13) est prédéfinie et que l'installation d'évaluation (25) est configurée pour la détermination d'une corrélation entre des effets de secousse détectés avec le capteur (20) du module de travail (12, 13) et des distances actuelles (r) entre le module de travail (12, 13) et le capteur (20).

14. Système selon la revendication 13, **caractérisé en ce que** le capteur (20) est couplé à un système de détection de position et une installation d'émission pour la transmission de données de position et que la machine de pose de voie (1) comprend une installation de réception pour la réception des données de position.

15. Système selon la revendication 13, **caractérisé en ce que** le capteur (20) est disposé sur la machine de pose de voie (1) et est notamment réalisé en tant qu'enregistreur d'accélération disposé sur un mécanisme de roulement ferroviaire (3).
